# EUROPÄISCHE PATENTANMELDUNG

(11) **EP 4 574 497 A1**
(43) Veröffentlichungstag der Anmeldung: **25.06.2025**
(21) Anmeldenummer: 24211959.2
(22) Anmeldetag: 11.11.2024
(51) Int. Cl.: B60K 7/00, B60K 17/16, B60T 1/00

(54) **TURAS ULTRA-KURZ GETRIEBE**

(30) Priorität: 20.12.2023 DE 102023135952
(71) Anmelder: Pulsgetriebe Gear Systems GmbH, 76227 Karlsruhe (DE)
(72) Erfinder: Puls, Christoph, 76227 Karlsruhe (DE)
(74) Vertreter: Durm Patentanwälte PartG mbB

(57) **Zusammenfassung**

Die vorliegende Erfindung betrifft ein Getriebe (24) für einen Antriebsstrang (12) einer mobilen Arbeitsmaschine (10), mit: einem Eingangs-Planetenradsatz (ER), umfassend ein Sonnenrad (30), ein Planetenrad, ein Hohlrad und einen Planetenradträger (32); einem Ausgangs-Planetenradsatz (AR), umfassend ein Sonnenrad (34), ein Planetenrad, ein Hohlrad und einen Planetenradträger (36); einem Getriebeflansch (46), der die beiden Planetenradsätze (ER, AR) antriebswirksam miteinander verbindet und jeweils ein Element der Planetenradsätze festsetzt; einer Hauptwelle (28), die mit einem Planetenradsatzelement des Eingangs-Planetenradsatzes (ER) antriebswirksam verbunden ist und mit einer elektrischen Antriebsmaschine (22) der mobilen Arbeitsmaschine (10) antriebswirksam verbindbar ist; einem durch einen Getriebedeckel (38) gebildeten Abtrieb (40), wobei der Getriebedeckel (38) in einer ersten Anbauvariante mit wenigstens einem Element des Ausgangs-Planetenradsatzes (AR) antriebswirksam verbindbar ist und Antriebsleistung zum Abtrieb (40) leitet und der Getriebedeckel (38) in einer zweiten Anbauvariante keine Antriebsleistung zum Abtrieb (40) leitet. Ferner betrifft die vorliegende Erfindung einen entsprechenden Antriebsstrang (12) sowie eine mobile Arbeitsmaschine.

## Beschreibung

Die vorliegende Erfindung betrifft Getriebe, einen Antriebsstrang sowie eine mobile Arbeitsmaschine.

Mobile Arbeitsmaschinen, beispielsweise Baumaschinen, insbesondere Bagger, Bohrgeräte, Asphaltwalzen, landwirtschaftliche Fahrzeuge, insbesondere auch autonom fahrende (sog. AgBots), Gabelstapler und Flurförderfahrzeuge unterschiedlichster Art, insbesondere fahrerlose Transportsysteme, Pistenraupen, geschützte Fahrzeuge etc., weisen üblicherweise speziell ausgebildete Antriebsstränge auf.

Insbesondere sollen die Antriebsstränge für die vorgenannten Fahrzeuge bzw. Einsatzzwecke vorzugsweise geschützt und bauraumeffizient ausgebildet sein. Daher erfolgt bei derartigen Antriebssträngen üblicherweise ein dichter Zusammenbau der einzelnen Komponenten des Fahrzeugstrangs, also einem Getriebe, einer Antriebsmaschine und einer Bremse.

Im Zuge der Dekarbonisierung findet vermehrt eine Elektrifizierung von vormals hydraulisch angetriebenen Kraftfahrzeugen und mobilen Arbeitsmaschinen statt. Die dafür obligatorischen elektrischen Antriebseinheiten sind wesentlich größer oder können nur durch eine massive Erhöhung der Drehzahl kompakter gebaut werden. Mit diesen hohen Drehzahlen geht eine massive Erhöhung der Plansch- und Reibungsverluste einher, weil die hohen Drehzahlen im Getriebe hohe drehzahlabhängige Verluste erzeugen. So sinkt die Energieeffizienz und die Erwärmung steigt. Zudem müssen hohe Übersetzungen mit den Getrieben erreicht werden, wobei die Getriebe bauraum- und gewichtseffizient ausgeführt sein sollten.

Es besteht daher ein Bedarf, ein Getriebe und einen Kraftfahrzeugantriebsstrang, insbesondere für eine mobile Arbeitsmaschine, weiterzuentwickeln, um wenigstens einen der vorgenannten Nachteile zu überwinden.

Vor diesem Hintergrund stellt sich einem Fachmann folglich die Aufgabe des Schaffens eines verbesserten und insbesondere kompakt bauenden Getriebes, vorzugsweise mit einer hohen Übersetzung, für einen Antriebsstrang, insbesondere für eine mobile Arbeitsmaschine. Vorzugsweise sollen eine Kühlung verbessert, Ölstände für jede Komponente des Antriebsstrangs optimiert und/oder ein modularer Aufbau des Antriebsstrangs ermöglicht werden.

Gelöst wird die oben stehende Aufgabe durch ein Getriebe für einen Antriebsstrang einer mobilen Antriebsmaschine, mit:
- einem Eingangs-Planetenradsatz;
- einem Ausgangs-Planetenradsatz;
- einem Getriebeflansch, der die beiden Planetenradsätze antriebswirksam miteinander verbindet und jeweils ein Element der Planetenradsätze festsetzt;
- einer Hauptwelle, die mit einem Planetenradsatzelement des Eingangs-Planetenradsatzes antriebswirksam verbunden ist und mit einer elektrischen Antriebsmaschine der mobilen Arbeitsmaschine vorzugsweise nicht schaltbar antriebswirksam verbindbar ist;
- einem durch einen Getriebedeckel gebildeten Abtrieb; wobei
- der Getriebedeckel, der in einer ersten Anbauvariante mit wenigstens einem Element des Ausgangs-Planetenradsatzes antriebswirksam verbindbar ist und Antriebsleistung zum Abtrieb leitet und in einer zweiten Anbauvariante keine Antriebsleistung zum Abtrieb leitet.

Die obige Aufgabe wird ferner gelöst von einem Antriebsstrang, mit:
- einem Getriebe wie zuvor definiert;
- einer elektrischen Antriebsmaschine, die mit dem Getriebe, vorzugsweise mit einem Sonnenrad des Eingangs-Planetenradsatzes des Getriebes, mittels der Hauptwelle antriebswirksam verbunden ist; und
- einem Energiespeicher zum Speichern von Energie zum Versorgen der elektrischen Antriebsmaschine.

Die obige Aufgabe wird schließlich gelöst durch eine mobile Arbeitsmaschine, mit:
- einem Antriebsstrang wie zuvor definiert, wobei die mobile Antriebsmaschine wenigstens ein angetriebenes Rad oder wenigstens zwei angetriebene Ketten aufweist und dem angetriebenen Rad oder jeder angetriebenen Kette jeweils wenigstens ein Antriebsstrang wie zuvor definiert zugeordnet ist.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere kann die mobile Arbeitsmaschine entsprechend den für den Antriebsstrang oder das Getriebe in den abhängigen Ansprüchen beschriebenen Ausgestaltungen ausgeführt sein.

Durch einen Eingangs-Planetenradsatz und einen Ausgangs-Planetenradsatz, die mittels eines Getriebeflanschs antriebswirksam miteinander verbunden sind, kann ein kompakt bauendes, im Wesentlichen unwuchtfreies Getriebe geschaffen werden, das gewichtsoptimiert ausgeführt ist und eine hohe Übersetzung ermöglicht. Durch eine Hauptwelle, die mit einem Planetenradsatzelement des Eingangs-Planetenradsatzes antriebswirksam verbunden ist und mit einer elektrischen Antriebsmaschine antriebswirksam verbindbar ist, kann eine technisch einfache Anbindung der Antriebsmaschine an das Getriebe erfolgen. Bevorzugt ist diese Anbindung nicht schaltbar ausgeführt, sodass eine Effizienz und ein Gewicht sowie ein Bauraumbedarf des Getriebes weiter verbessert sein können. Ferner wird die Ansteuerung des Getriebes hierdurch vereinfacht. Bevorzugt ist keine Ansteuerung des Getriebes nötig, da mit dem Getriebe vorzugsweise nur eine einzige Gangstufe einrichtbar ist. Es versteht sich, dass eine Rückwärtsgangstufe durch Rückwärtsdrehen der elektrischen Antriebsmaschine ermöglicht wird. Durch die zwei Anbauvarianten des Getriebedeckels kann technisch einfach ein Freilauf bzw. Leerlauf des Getriebes eingerichtet werden. So kann in einer ersten Anbauvariante der Getriebedeckel vorzugsweise Teil des Abtriebs bilden und Antriebsleistung von einem Getriebeausgang zu einem angetriebenen Rad oder einer angetriebenen Kette leiten. In einer zweiten Einbauvariante oder wenn der Getriebedeckel abgenommen oder gelöst ist, wird keine Antriebsleistung zum Abtrieb geleitet und ein Leerlauf bzw. Freilauf eingerichtet, um beispielsweise die mobile Arbeitsmaschine abzuschleppen. Besonders bevorzugt dreht kein Planetenradsatz des Getriebes mit, wenn im Getriebe ein Freilauf eingerichtet ist und die mobile Arbeitsmaschine bewegt wird. Die zweite Einbauvariante kann insbesondere umfassen, dass der Getriebedeckel mit der Innenseite nach außen am Getriebe montiert wird.

In einer bevorzugten Ausführungsform umfasst das Getriebe einen Zwischen-Planetenradsatz, wobei ein Sonnenrad des Zwischen-Planetenradsatzes mit einem Planetenradträger des Eingangs-Planetenradsatzes antriebswirksam verbunden ist und ein Planetenradträger des Zwischen-Planetenradsatzes mit einem Sonnenrad des Ausgangs-Planetenradsatzes antriebswirksam verbunden ist. Durch einen Zwischen-Planetenradsatz kann ein Übersetzungsverhältnis des Getriebes weiter erhöht werden und dabei der Bauraumbedarf geringgehalten werden. Es kann ein hoch effizientes Getriebe mit einer hohen Übersetzung und geringem Gewicht sowie geringem Bauraumbedarf geschaffen werden.

Besonders vorteilhaft bildet der Getriebeflansch ein gemeinsames Hohlrad für alle Planetenradsätze. Alternativ sind die Hohlräder aller Planetenradsätze antriebswirksam mit dem Getriebeflansch verbunden. Hierdurch kann eine vorteilhafte kompakte Bauform des Getriebes erreicht werden. Durch einen Getriebeflansch, der alle Hohlräder des Getriebes miteinander verbindet, kann eine Verbindung zwischen den einzelnen Planetenradsätzen des Getriebes technisch einfach eingerichtet werden. Bevorzugt ist der Getriebeflansch festgesetzt und besonders bevorzugt mit einem Gehäuse der elektrischen Antriebsmaschine verbunden.

In einer bevorzugten Ausgestaltung des Antriebsstrangs weist dieser ein Wälzlager, vorzugsweise mehrere Wälzlager, zum Lagern eines äußeren Gehäuses des Getriebes an einem inneren Gehäuse des Getriebes und/oder der elektrischen Antriebsmaschine, insbesondere einem Gehäuse der elektrischen Antriebsmaschine, auf. Das innere Gehäuse des Getriebes umgibt die Planetenradsätze, wobei das äußere Gehäuse mit dem Abtrieb und einem Rad, einer Felge oder einem Kettenrad der mobilen Arbeitsmaschine antriebswirksam verbunden ist. Durch die vorteilhafte Anordnung des Wälzlagers kann eine Lagerung außerhalb eines inneren Getriebebereichs erfolgen, in dem die Planetenradstufen liegen. Der Aufbau und Zusammenbau des Getriebes sind vereinfacht. Insbesondere kann ein Tausch eines defekten Lagers ohne Eingriff in das Getriebeinnere erfolgen. Dadurch, dass die Planetenradstufen, die bisweilen ein hohes Drehmoment aufbringen, innerhalb der Lagerung gelagert sind, kann eine effektive Lagerung erfolgen.

In besonders bevorzugter Ausführungsform ist das Wälzlager ein Rillenkugellager, ein Nadellager, ein Gleitlager, ein Zylinderrollenlager, bevorzugt ein vollrolliges Zylinderrollenlager, besonders bevorzugt jeweils mit einer in ein Getriebegehäuse integrierten Laufbahn. Die vorgenannten Lager können vorzugsweise fettgeschmiert sein, wobei das Getriebe besonders bevorzugt durch Ölsumpf geschmiert ist. Eine Abdichtung des mit Fett gefüllten Teils erfolgt vorzugsweise durch Labyrinth-Dichtungen, Nilos-Scheiben, abgedichtete Rillenkugellager oder Radialwellendichtringe. Durch die Ausführung des Wälzlagers als eines der vorgenannten Lager kann ein bevorzugtes, mit Fett geschmiertes Lager Anwendung finden. Durch eine in ein Getriebegehäuse integrierte Laufbahn kann ein Getriebe mit wenigen Bauteilen aufgebaut werden, da das Getriebegehäuse sowohl als Gehäuse als auch als Führung für die Lager verwendet werden kann. Es kann ein robustes und ausfallsicheres Getriebe geschaffen werden.

In besonders bevorzugter Ausführungsform ist das innere Gehäuse des Getriebes zumindest abschnittsweise innerhalb des äußeren Gehäuses des Getriebes angeordnet. Hierdurch kann eine Kompaktheit des Getriebes verbessert werden. Insbesondere kann hierdurch eine Lagerung zwischen den beiden Gehäusen des Getriebes erfolgen. Vorzugsweise umgibt das innere Getriebegehäuse die Planetenradsätze.

In einer weiteren vorteilhaften Ausgestaltung ist das innere Gehäuse des Getriebes vollständig innerhalb des äußeren Gehäuses des Getriebes angeordnet und die elektrische Antriebsmaschine zumindest abschnittsweise innerhalb des äußeren Gehäuses des Getriebes angeordnet. Hierdurch kann eine Kompaktheit des Antriebsstrangs weiter verbessert werden. Ferner kann das äußere Getriebegehäuse als Abtrieb, Radnabe oder Kettenradnabe fungieren, sodass schlussendlich die elektrische Antriebsmaschine zumindest teilweise innerhalb der Radnabe aufgenommen ist. Es kann ein hoch kompakter effizienter Antriebsstrang geschaffen werden.

In besonders bevorzugter Ausführungsform weist der Antriebsstrang eine Bremse auf, wobei die Hauptwelle des Getriebes mit der elektrischen Antriebsmaschine, folglich dem Getriebe und der Bremse antriebswirksam verbunden ist. Das Getriebe ist an einer ersten Seite der elektrischen Antriebsmaschine angeordnet. Die Bremse ist an einer der ersten Seite gegenüberliegenden Seite an der elektrischen Antriebsmaschine angeordnet. Vorzugsweise umfasst die Bremse eine hydraulische Lamellenbremse, eine Scheibenbremse, eine elektromagnetisch betätigte Bremse oder eine Sperrklinke. Durch die Trennung von Bremse und Getriebe kann ein größeres Ölvolumen im Getriebe aufgenommen werden, was zu einer verbesserten Ölqualität, einem erhöhten Wärmeabtransport und einer geringeren Empfindlichkeit gegen Schwankungen des Ölstands im Getriebe führt. Außerdem kann so jeweils für Bremse und Getriebe der optimale Ölstand realisiert werden, da die Anforderungen unterschiedlich sein können.

Zudem führt die vorteilhafte Anordnung der Bremse zu einer verbesserten Kühlung, beispielsweise direkt durch den Fahrtwind, Regen oder Schnee. Ölstände können für jede Komponente des Antriebsstrangs getrennt bestimmt werden und optimal für die jeweilige Komponente, also Bremse, Antriebseinheit und/oder Getriebe, eingestellt werden.

Ferner kann durch das Trennen der Komponenten Bremse und Getriebe ein Ölwechsel vereinfacht durchgeführt werden. Es versteht sich, dass hierbei auch eine bessere Zugänglichkeit zur Bremse, beispielsweise für Überprüfung und Wartung, gegeben ist. Insbesondere ist hierfür kein Manipulieren des Getriebes oder der Antriebseinheit, und insbesondere kein Abbau der Antriebseinheit, nötig, sodass das Lüftspiel, ein Verschleiß und/oder der Zustand von beispielsweise Bremslamellen erleichtert überprüft werden können. Es versteht sich, dass ein Austausch von Lamellen, Dichtungen und/oder Schmiermittel ebenfalls vereinfacht ist.

Elektrische Antriebsmaschinen zeichnen sich insbesondere dadurch aus, dass sie abgasfrei betrieben werden können. Ferner kann auf geringem Bauraum ein hohes Drehmoment erzeugt werden, das bereits bei niedrigen Drehzahlen anliegt. Zudem decken elektrische Antriebsmaschinen ein breites Drehzahlband ab. Hierbei kann die elektrische Antriebsmaschine besonders vorteilhaft mit einem Planetenradsatz, der eine hohe Übersetzung ermöglicht, verwendet werden.

Mittels eines oder mehrerer Planetensätze, alternativ auch mittels eines gestuften Planetenradsatzes, kann ein kompakt bauendes Getriebe für den Antriebsstrang geschaffen werden, das sich durch eine hohe Übersetzung und hohe Robustheit auszeichnet. Vorteilhafterweise kann ein Planetenradsatz bzw. die Planetenradsätze im Wesentlichen rotationssymmetrisch ausgebildet sein und um die Hauptwelle herum angeordnet werden, sodass beim Betrieb des Getriebes keine oder nur eine geringe Unwucht entsteht.

Die mobile Arbeitsmaschine kann einen weiteren Antriebsstrang wie zuvor definiert aufweisen, wobei die mobile Arbeitsmaschine ein Kettenfahrzeug mit zwei Ketten oder wenigstens zwei angetriebenen Rädern ist und jeder Kette oder jedem angetriebenen Rad jeweils wenigstens ein Antriebsstrang zugeordnet ist. Es versteht sich, dass auch mehrere Antriebsstränge einer Kette zugeordnet sein können, um die Antriebsleistung der Kette zu erhöhen. Durch das Verbinden wenigstens eines Antriebsstrangs mit jeweils einer Kette oder jeweils einem Rad kann eine mobile Arbeitsmaschine mit hoher Manövrierfähigkeit geschaffen werden.

Der Antriebsstrang kann als eine Baugruppe ausgebildet sein, die aus Unterbaugruppen zusammengesetzt ist. Die Bremse, die elektrische Antriebsmaschine und/oder das Getriebe sind jeweils eine Unterbaugruppe. Durch den Aufbau des Antriebsstrangs als Baugruppe kann ein modularer Aufbau des Antriebsstrangs erfolgen. Insbesondere können die einzelnen Komponenten entsprechend dem Anwendungsfall ausgelegt sein. Eine Bremse kann leicht als komplettes Bauteil getauscht werden. Das Getriebe kann bedarfsgerecht, speziell auf die Anforderungen angepasst, ausgeführt sein. Der modulare Aufbau als Baugruppe aus Unterbaugruppen ermöglicht das Schaffen eines individuell angepassten Antriebsstrangs mit geringem Aufwand. Es kann eine Art Serienfertigung für individuell angepasste Antriebsstränge ermöglicht werden.

Es versteht sich, dass das Getriebe und/oder die Bremse mit der Antriebsmaschine, insbesondere einem Gehäuse der Antriebsmaschine, verbunden, insbesondere verschraubt, vernietet, geschweißt und/oder verklebt sein kann. Hierdurch kann sowohl Gewicht als auch Bauraum eingespart werden, da auf zusätzliche Befestigungsteile und/oder eine weitere Umhausung verzichtet werden kann. Hierdurch kann ein modularer Aufbau verbessert realisiert werden, da keine speziell angefertigten Komplettumhausungen, die den Antriebsstrang komplett umgeben, benötigt werden. Die einzelnen Komponenten können an dafür vorgesehenen Stellen miteinander verschraubt werden. Somit wird zum Schaffen des Antriebsstrangs vorzugsweise nur eine Verschraubung, eine Vernietung, eine Schweißnaht und/oder ein Klebefalz benötigt. Vorzugsweise wird durch das Verbinden eine gemeinsame Umhausung für den Antriebsstrang geschaffen.

Unter "antriebswirksam verbunden" soll in diesem Zusammenhang insbesondere eine nicht schaltbare Verbindung zwischen zwei Bauteilen verstanden werden, welche zu einer permanenten Übertragung einer Drehzahl, eines Drehmoments und/oder Antriebsleistung vorgesehen ist. Die Verbindung kann dabei sowohl direkt als auch über eine Festübersetzung erfolgen. Die Verbindung kann beispielsweise über eine feste Welle, eine Verzahnung, insbesondere eine Stirnradverzahnung und/oder ein Umschlingungsmittel, insbesondere ein Zugmittelgetriebe, und/oder über eine Verschraubung oder dergleichen erfolgen.

Ein Festsetzen eines Elements eines Planetenradsatzes ist insbesondere als ein Blockieren einer Drehung des Elements um seine Rotationsachse zu verstehen. Vorzugsweise wird dabei das Element drehfest mit einem statischen Bauteil wie einem Rahmen und/oder einem Getriebegehäuse verbunden. Es ist auch denkbar, das Element bis zu einem Stillstand zu bremsen.

Unter "antriebswirksam verbindbar", "kann antriebswirksam verbunden werden" oder "ist zum antriebswirksamen Verbinden ausgebildet" soll in diesem Zusammenhang insbesondere ein schaltbares Verbinden zwischen zwei Bauteilen verstanden werden, welches in einem geschlossenen Zustand zu einer temporären Übertragung einer Drehzahl, eines Drehmoments und/oder einer Antriebsleistung vorgesehen ist. In einem geöffneten Zustand überträgt das schaltbare Verbinden vorzugsweise temporär im Wesentlichen keine Drehzahl, kein Drehmoment und/oder keine Antriebsleistung.

Ein Aktor ist vorliegend insbesondere ein Bauteil, das ein elektrisches oder fluidisches Signal in eine mechanische Bewegung umsetzt.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Draufsicht auf eine mobile Arbeitsmaschine mit einem erfindungsgemäßen Getriebe und Antriebsstrang;
- Figur 2: eine schematische Darstellung eines erfindungsgemäßen Getriebes;
- Figur 3: eine detaillierte Darstellung eines erfindungsgemäßen Getriebes gemäß der Figur 2;
- Figur 4: eine schematische Darstellung eines weiteren erfindungsgemäßen Getriebes; und
- Figur 5: eine detaillierte Darstellung eines erfindungsgemäßen Getriebes gemäß der Figur 4.

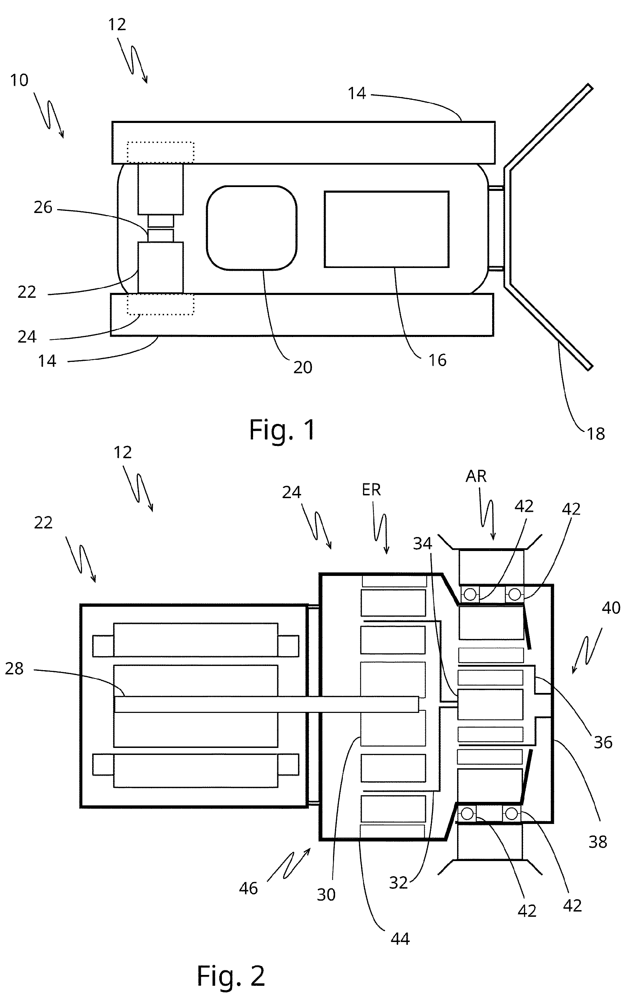

Figur 1 zeigt eine schematische vereinfachte Draufsicht auf eine mobile Arbeitsmaschine 10 mit einem erfindungsgemäßen Antriebsstrang 12. Die mobile Arbeitsmaschine 10 ist in dem gezeigten Beispiel als Pistenraupe ausgebildet und weist zwei Ketten 14, ein Führerhaus 16 und eine Schneeschaufel 18 auf.

Ferner umfasst die mobile Arbeitsmaschine 10 einen Energiespeicher 20, der dazu ausgebildet ist, eine Antriebsmaschine 22 in Form einer elektrischen Antriebsmaschine mit Energie zu versorgen, um ein Getriebe 24, die Ketten 14 und schließlich die mobile Arbeitsmaschine 10 anzutreiben. Rückseitig an der Antriebsmaschine 22 ist eine Bremse 26 angeordnet, die dazu ausgebildet ist, sowohl die Antriebsmaschine 22 als auch das Getriebe 24 und schlussendlich die Ketten 14 und die mobile Arbeitsmaschine 10 zu bremsen.

In Figur 2 ist ein Antriebsstrang 12 schematisch detailliert dargestellt. Der Antriebsstrang 12 weist in dem gezeigten Beispiel die elektrische Antriebsmaschine 22 und das Getriebe 24 auf. Die elektrische Antriebsmaschine 22 ist mittels einer Hauptwelle 28 mit dem Getriebe 24 verbunden, wobei die Hauptwelle 28 ebenfalls eine Rotorwelle der elektrischen Antriebsmaschine 22 ist.

Das Getriebe 24 weist einen Eingangs-Planetenradsatz ER und einen Ausgangs-Planetenradsatz AR auf. Die Hauptwelle 28 ist antriebswirksam mit einem Sonnenrad 30 des Eingangs-Planetenradsatzes ER verbunden. Ein Planetenradträger 32 des Eingangs-Planetenradsatzes ER ist antriebswirksam mit einem Sonnenrad 34 des Ausgangs-Planetenradsatzes AR verbunden und ein Planetenradträger 36 des Ausgangs-Planetenradsatzes AR ist antriebswirksam mit einem Getriebedeckel 38 verbunden.

Der Getriebedeckel 38 bzw. der Planetenradträger 36 bilden einen Abtrieb 40 des Getriebes 24. Der Getriebedeckel 38 ist über Lager 42 an einem Gehäuse 44 des Getriebes 24 gelagert. Zudem bildet das Gehäuse 44 einen Getriebeflansch 46, über den das Hohlrad des Eingangs-Planetenradsatzes ER antriebswirksam mit dem Hohlrad des Ausgangs-Planetenradsatzes AR verbunden ist.

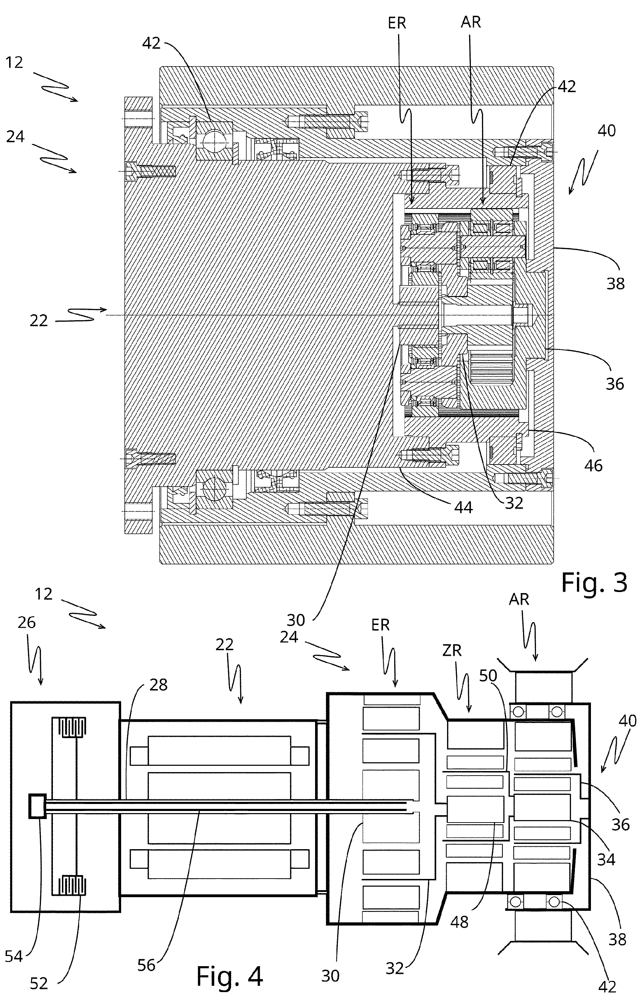

In Figur 3 ist der Antriebsstrang 12 gemäß Figur 2 detailreicher dargestellt. Gleiche Bezugszeichen bzw. gleiche Merkmale werden nicht erneut erläutert.

In der detailreichen Ansicht ist der Getriebedeckel 38 mit einem weiteren Gehäuseteil verschraubt, wobei das weitere Gehäuseteil wiederum mit einer Aufnahme für eine angetriebene Kette oder ein getriebenes Rad verbunden ist.

Folglich kann der Getriebedeckel 38, der zudem auch mit dem Planetenradträger 36 des Abtriebs-Planetenradsatzes AR antriebswirksam verbunden ist, einfach abgeschraubt werden, sodass durch diese Ausbausituation des Getriebedeckels 38 ein Freilauf des Getriebes 24 ermöglicht wird.

Insbesondere ist es auch denkbar, den Getriebedeckel 38 nicht komplett abzubauen, sondern den Getriebedeckel 38 derart einzubauen, dass seine bisherige Außenseite nach innen zum Getriebe 24 weist. Die antriebswirksame Verbindung zwischen Planetenradträger 36 des Abtriebs-Planetenradsatzes AR und dem Getriebedeckel 38 wird gelöst und das Getriebe 24 ist dennoch vor Verschmutzung und Beschädigung geschützt.

In Figur 4 ist eine weitere Variante eines Antriebsstrangs 12 gezeigt. Im Unterschied zu der in Figur 2 gezeigten Ausführungsform weist der Antriebsstrang 12 eine Bremse 26 auf.

Ferner ist im Getriebe 24 zusätzlich ein Zwischen-Planetenradsatz ZR aufgenommen. Die Bremse 26 ist auf einer ersten Seite der elektrischen Antriebsmaschine 22 angeordnet, wobei das Getriebe 24 auf einer gegenüberliegenden Seite an der elektrischen Antriebsmaschine 22 angeordnet ist.

Die Bremse 26 weist in dem gezeigten Beispiel eine Lamellenbremse 52 auf, die antriebswirksam mit der Hauptwelle 28 verbunden ist. Die Hauptwelle 28 ist als Hohlwelle ausgebildet, wobei innerhalb der Hauptwelle 28 ein Schmierfluid für das Getriebe geführt werden kann, das von einer Fluidfördervorrichtung 54 in das Getriebe 24 gefördert wird.

Der Eingangs-Planetenradsatz ER des Getriebes 24 ist über seinen Planetenradträger 32 mit einem Sonnenrad 48 des Zwischen-Planetenradsatzes ZR verbunden. Der Zwischen-Planetenradsatz ZR ist über seinen Planetenradträger 50 mit dem Sonnenrad 34 des Abtriebs-Planetenradsatzes AR verbunden.

Die sonstigen Anbindungen am Eingangs-Planetenradsatz ER und am Abtriebs-Planetenradsatz AR sind identisch zu denen gemäß Figur 2. Die Hohlräder der Planetenradsätze ER, ZR, AR sind wie in der Ausführungsform gemäß Figur 2 über ein Getriebegehäuse bzw. einen Getriebeflansch 46 antriebswirksam miteinander verbunden.

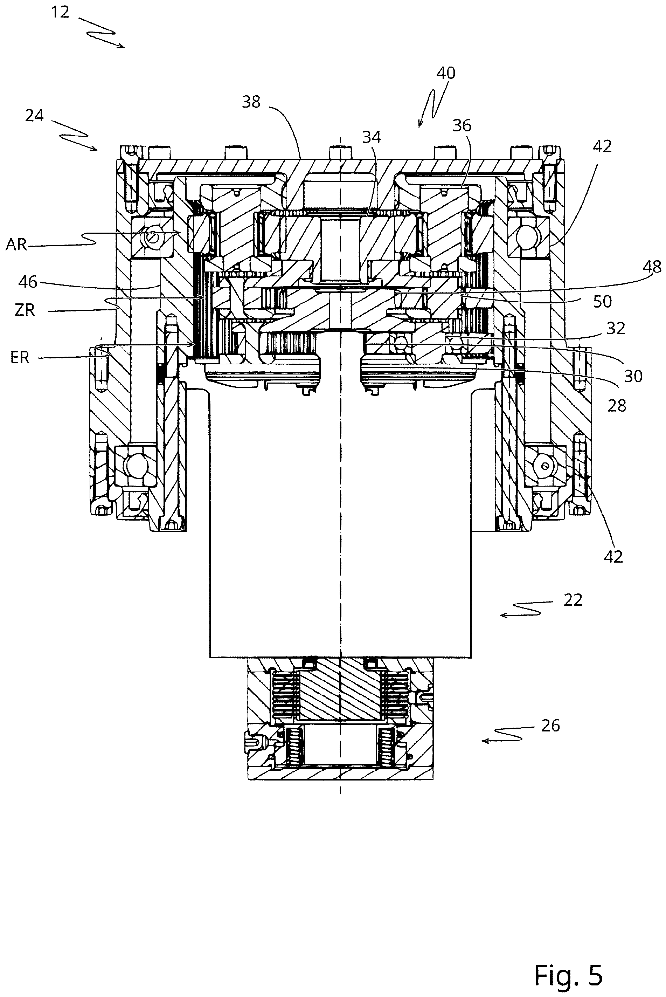

In Figur 5 ist der Antriebsstrang gemäß der Figur 4 detailreicher dargestellt. Im Unterschied zu der in Figur 4 gezeigten Darstellung sind verschiedene Lager 42 im Antriebsstrang 12 dargestellt. Ferner ist die Bremse 26 detailreicher gezeigt, wobei einzelne Lamellen der Bremse durch einen Fluidaktor, also einen Fluidkolben gelöst werden können.

Die Bremse 26 umfasst Federn, die auf die Lamellen eine Druckkraft ausüben, sodass die Lamellen aneinandergedrückt werden und die Hauptwelle 28 bremsen. Durch Hydraulikdruck kann dieser Fluidkolben, der durch die Federn ausgeübten Kraft entgegenwirken, sodass die Lamellen frei sind, also die Bremse 26 gelüftet wird und keine Bremswirkung mehr stattfindet.

Ein Teil der Lamellen ist antriebswirksam mit der Hauptwelle 28 verbunden. Ein weiterer Teil der Lamellen ist drehfest, beispielsweise mit dem Gehäuse der Bremse 26, verbunden. Vorzugsweise sind die Lamellen in Richtung der Hauptwelle 28 gesehen jeweils alternierend an der Hauptwelle 28 und am Gehäuse der Bremse 26 angeordnet.

Im Unterschied zu der in Figur 4 gezeigten Ausführungsform ist die Verbindung der einzelnen Antriebsstrang-Elemente mittels Schrauben detailliert schematisch dargestellt. Ein Fachmann erkennt hierbei, dass je nach Anwendungsfall einzelne Komponenten des Antriebsstrangs 12 getauscht werden können. Die gezeigte Ausführungsform der Bremse ist sowohl in der Dimension als auch im Bremsentyp nur beispielhaft zu verstehen. Es versteht sich, dass entsprechend größer oder kleiner dimensionierte Bremsen, insbesondere auch Bremsen eines anderen Typs, Anwendung finden können.

Die obigen Ausführungen gelten analog auch zur detailreichen Darstellung eines Antriebsstrangs 12 gemäß Figur 3.

Die Erfindung wurde anhand der Zeichnungen und der Beschreibung umfassend beschrieben und erklärt. Die Beschreibung und die Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann.

## Patentansprüche

1. Getriebe (24) für einen Antriebsstrang (12) einer mobilen Arbeitsmaschine (10), mit:
einem Eingangs-Planetenradsatz (ER), umfassend ein Sonnenrad (30), ein Planetenrad, ein Hohlrad und einen Planetenradträger (32);
einem Ausgangs-Planetenradsatz (AR), umfassend ein Sonnenrad (34), ein Planetenrad, ein Hohlrad und einen Planetenradträger (36);
einem Getriebeflansch (46), der die beiden Planetenradsätze (ER, AR) antriebswirksam miteinander verbindet und jeweils ein Element der Planetenradsätze festsetzt;
einer Hauptwelle (28), die mit einem Planetenradsatzelement des Eingangs-Planetenradsatzes (ER) antriebswirksam verbunden ist und mit einer elektrischen Antriebsmaschine (22) der mobilen Arbeitsmaschine (10) antriebswirksam verbindbar ist;
einem durch einen Getriebedeckel (38) gebildeten Abtrieb (40), wobei der Getriebedeckel (38) in einer ersten Anbauvariante mit wenigstens einem Element des Ausgangs-Planetenradsatzes (AR) antriebswirksam verbindbar ist und Antriebsleistung zum Abtrieb (40) leitet und der Getriebedeckel (38) in einer zweiten Anbauvariante keine Antriebsleistung zum Abtrieb (40) leitet.

2. Getriebe (24) nach Anspruch 1, wobei
das Getriebe (24) einen Zwischen-Planetenradsatz (ZR) umfasst;
ein Sonnenrad (48) des Zwischen-Planetenradsatzes (ZR) mit dem Planetenradträger (32) des Eingangs-Planetenradsatzes (ER) antriebswirksam verbunden ist;
ein Planetenradträger (50) des Zwischen-Planetenradsatzes (ZR) mit dem Sonnenrad (34) des Ausgangs-Planetenradsatzes (AR) verbunden ist.

3. Getriebe (24) nach einem der vorstehenden Ansprüche, wobei der Getriebeflansch (46) ein gemeinsames Hohlrad für alle Planetenradsätze (AR, ER, ZR) bildet und/oder alle Hohlräder der Planetenradsätze (AR, ER, ZR) antriebswirksam miteinander verbindet und diese festsetzt.

4. Antriebsstrang (12) mit:
einem Getriebe (24) nach einem der Ansprüche 1 bis 3;
einer elektrischen Antriebsmaschine (22), die mit dem Getriebe (24), vorzugsweise mit einem Sonnenrad (30) des Eingangs-Planetenradsatzes (ER) des Getriebes (24), antriebswirksam verbunden ist; und
einem Energiespeicher (20) zum Speichern von Energie zum Versorgen der Antriebsmaschine (22).

5. Antriebsstrang (12) nach dem vorstehenden Anspruch, mit einem Wälzlager (42) zum Lagern eines äußeren Gehäuses des Getriebes (24) an einem inneren Gehäuse (44) des Getriebes (24) und/oder der elektrischen Antriebsmaschine (22), wobei das innere Gehäuse (44) die Planetenradsätze (AR, ER, ZR) umgibt und das äußere Gehäuse mit dem Abtrieb (40) und vorzugsweise einem Rad, einer Felge oder einem Kettenrad der mobilen Arbeitsmaschine (10) antriebswirksam verbunden ist.

6. Antriebsstrang (12) nach einem der vorstehenden Ansprüche, wobei das Wälzlager (42) ein Rillenkugellager, ein Nadellager, ein Gleitlager, ein Zylinderrollenlager, bevorzugt ein vollrolliges Zylinderrollenlager, besonders bevorzugt mit einer in ein Getriebegehäuse integrierten Laufbahn, ist.

7. Antriebsstrang (12) nach einem der vorstehenden Ansprüche, wobei
das innere Gehäuse (44) des Getriebes (24) zumindest abschnittsweise innerhalb des äußeren Gehäuses des Getriebes (24) angeordnet ist.

8. Antriebsstrang (12) nach einem der vorstehenden Ansprüche, wobei
das innere Gehäuse (44) des Getriebes (24) vollständig innerhalb des äußeren Gehäuses des Getriebes (24) angeordnet ist; und
die elektrische Antriebsmaschine (22) zumindest abschnittsweise innerhalb des äußeren Gehäuses des Getriebes (24) angeordnet ist.

9. Antriebsstrang (12) nach einem der vorstehenden Ansprüche, mit:
einer Bremse (26); wobei
die Hauptwelle (28) mit der elektrischen Antriebsmaschine (22), dem Getriebe (24) und der Bremse (26) antriebswirksam verbunden ist;
das Getriebe (24) an einer ersten Seite der elektrischen Antriebsmaschine (22) angeordnet ist;
die Bremse (26) an einer der ersten Seite gegenüberliegenden Seite an der elektrischen Antriebsmaschine (22) angeordnet ist; und
die Bremse (26)
eine hydraulische Lamellenbremse;
eine Scheibenbremse;
eine elektromagnetisch betätigte Bremse; oder
eine Sperrklinke umfasst.

10. Mobile Arbeitsmaschine (10), mit:
einem Antriebsstrang (12) nach einem der Ansprüche 4 bis 9; wobei die mobile Arbeitsmaschine (10) wenigstens ein angetriebenes Rad oder wenigstens zwei angetriebene Ketten aufweist und dem angetriebenen Rad oder jeder angetriebenen Kette jeweils wenigstens ein Antriebsstrang (12) zugeordnet ist.
